# EUROPÄISCHE PATENTSCHRIFT

(11) **EP 0 326 064 B1**
(45) Veröffentlichungstag und Bekanntmachung des Hinweises auf die Patenterteilung: **09.06.1993**
(21) Anmeldenummer: 89101132.2
(22) Anmeldetag: 23.01.1989
(51) Int. Cl.: H02M 3/335, H02H 7/122

(54) **Speiseschaltung zur Speisung wenigstens eines Verbrauchers aus einem eingeprägten Gleichstrom**
Power supply device for supplying at least one load with a DC current source
Circuit d'alimentation pour alimenter au moins une charge avec une source de courant continu

(30) Priorität: 26.01.1988 DE 3802224
(43) Veröffentlichungstag der Anmeldung: 02.08.1989
(73) Patentinhaber: SIEMENS AKTIENGESELLSCHAFT, 80333 München (DE)
(72) Erfinder: Varadi, Werner, Dipl.-Ing., D-8000 München 60 (DE)

(56) Entgegenhaltungen:
- EP-A- 0 170 932
- GB-A- 2 073 918
- US-A- 4 037 271
- PATENT ABSTRACTS OF JAPAN, Band 6, Nr. 79 (P-115)[957], 18. Mai 1982; & JP-A-57 14 919 (YOKOGAWA DENKI SEISAKUSHO K.K.) 26-01-1982

## Beschreibung

Die Erfindung bezieht sich auf eine wie im Oberbegriff des Patentanspruchs 1 angegebene Speiseschaltung zur Speisung wenigstens eines Verbrauchers aus einem eingeprägten Gleichstrom.

Eine derartige Speiseschaltung ist bereits aus der EP-A1-0 170 932 bekannt. Bei der bekannten Speiseschaltung ist in Kette zu einem Schaltregler ein Spannungsumrichter angeordnet. Am Eingang des Spannungsumrichters ist ein Stromfühler für den Eingangsstrom vorgesehen. Der Spannungsumrichter wird mittels des Stromfühlers und einer an den Stromfühler angeschlossenen Steuerschaltung so gesteuert, daß er bei Eingangsströmen oberhalb eines vorgegebenen Grenzwertes eine verminderte Ausgangsspannung bzw. verminderte Ausgangsleistung abgibt. Auf diese Weise wird erreicht, daß die Speiseschaltung weitgehend unempfindlich gegen Überlastungszustände ist. Insbesondere ist die bekannte Speiseschaltung in der Lage, im Anschluß an einen Überlastungszustand selbsttätig in den normalen Betriebszustand überzugehen.

Aufgabe der Erfindung ist es, eine Speiseschaltung zur Speisung wenigstens eines Verbrauchers mit einer aus einem eingeprägten Gleichstrom gewonnenen Gleichspannung so auszubilden, daß sie - abgesehen von gegebenenfalls vorgesehenen Nachreglern oder dergleichen - einstufig ausgebildet ist und dabei eine Leistungsbegrenzung des Ausgangskreises bzw. der Ausgangskreise gewährleistet.

Gemäß der Erfindung wird die Speiseschaltung zur Lösung dieser Aufgabe in der im kennzeichnenden Teil des Patentanspruchs 1 angegebenen Weise ausgebildet.

Durch diese Maßnahmen ergibt sich der Vorteil, daß die Speiseschaltung wenigstens eine konstante, potentialgetrennte Ausgangsspannung erzeugt und, insbesondere bei niederohmiger Last, bei Ausgangsspannungen, die kleiner als die Nennspannung oder gleich der Nennspannung sind, eine konstante Leistung abgibt.

Zweckmäßigerweise wird eine Leistungsbegrenzung für den Ausgangskreis oder für die Ausgangskreise vorgesehen. Hierfür gibt es verschiedene Möglichkeiten. Wird die Speiseschaltung in der in Patentanspruch 2 angegebenen Weise ausgebildet, wird die Eingangsspannung auf den Wert begrenzt, der der maximalen Leistung entspricht, so ergibt sich in vorteilhafter Weise eine Regelung der Leistungsaufnahme auf einen konstanten Wert, so daß bei hoher Belastung bzw. bei niedrigen Lastwiderständen über den Wirkungsgrad eine nahezu konstante Ausgangsleistung resultiert.

Für die Regelung der Ausgangsspannung auf einen konstanten Wert gibt es verschiedene Möglichkeiten.

Bei der Weiterbildung der Speiseschaltung nach Anspruch 3 wird die EMK auf einen konstanten Wert geregelt.

Die Maßnahmen nach Anspruch 4 können sich bei der Begrenzung der Eingangsspannung als zweckmäßig erweisen.

Die weitere Ausgestaltung nach Anspruch 5 hat den Vorteil, daß zur Regelung der EMK und zur Begrenzung der Eingangsspannung nur ein einziger Regelvergleicher erforderlich ist.

Einen besonders einfachen Aufbau des Transformators ermöglichen die Maßnahmen nach Anspruch 6.

Entsprechend Anspruch 7 kann statt der Begrenzung der Leistung eine Begrenzung des Ausgangsstromes vorgesehen werden. In diesem Fall nimmt die abgegebene Leistung bei sinkendem Lastwiderstand ab, so daß die abgegebene Leistung eine vorgegebene obere Grenze nicht überschreiten kann. Die Potentialtrennung zwischen Eingang- und Ausgangsleistungskreis wird dabei insbesondere durch die Maßnahmen nach Anspruch 8 sichergestellt.

Wie in Anspruch 9 angegeben, eignet sich die Speiseschaltung insbesondere für eine Verwendung in einer Einrichtung zur Fernspeisung von Zwischenstellen in Einrichtungen der elektrischen oder elektrooptischen Nachrichtenübertragungstechnik.

Die Erfindung wird anhand der in den Figuren dargestellten Ausführungsbeispiele näher erläutert:

Es zeigen
- Fig. 1: einen konstantstromgespeisten Sperreinrichter mit Regelung der Leerlaufspannung und Begrenzung der Eingangsspannung,
- Fig. 2: einen konstantstromgespeisten Sperrumrichter mit Regelung der Ausgangsspannung und Begrenzung der Eingangsspannung und
- Fig. 3: einen konstantstromgespeisten Sperrumrichter mit Regelung der Ausgangsspannung und Begrenzung des Ausgangsstromes.

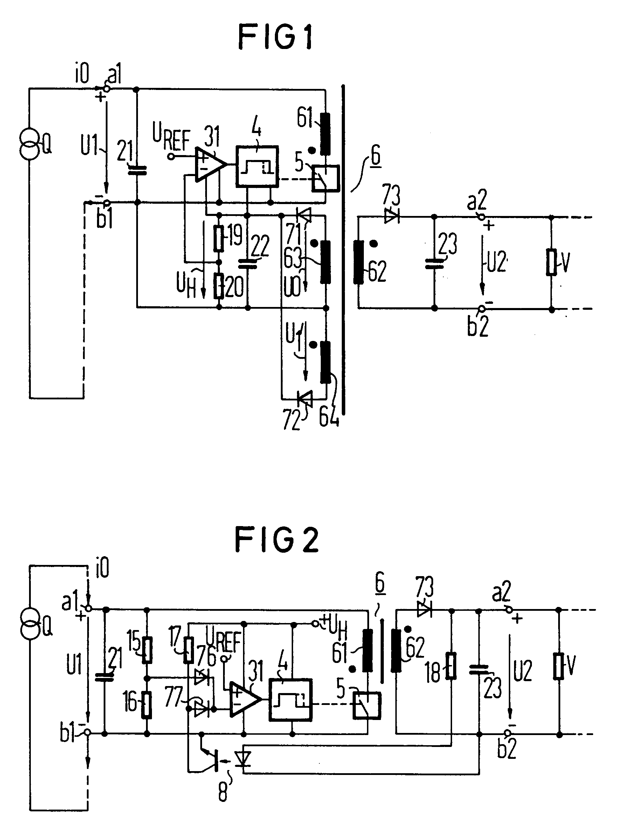

Die in Fig. 1 gezeigte Speiseschaltung zur Speisung des Verbrauchers V erzeugt aus dem eingeprägten Strom i0 die eingeprägte Ausgangsspannung U2. Die Speiseschaltung kann insbesondere in Fernspeiseeinrichtungen mit Gleichstrom-Reihenspeisung dazu dienen, in ferngespeisten Zwischenstellen jeweils einen oder mehrere Verbraucher mit Spannung zu versorgen. Der Eingang a1, b1 liegt in Serie zu weiteren nicht dargestellten gleichartigen Speisenschaltungen in einem Fernspeisekreis, in den die Konstantstromquelle Q den Kontaktstrom i0 einspeist.

Die Speiseschaltung ist als konstantstromgespeister Sperrumrichter ausgebildet. Bei diesem Sperrumrichter ist eine Serienschaltung aus der Primärwicklung 61 des Speichertransformators 6 und dem steuerbaren Schalter 5 an den Eingang a1, b1 der Speiseschaltung angeschlossen. Der steuerbare Schalter 5 liegt daher in einem parallel zum Eingang a1, b1 der Speiseschaltung angeordneten Stromzweig. Außerdem ist der Kondensator 21 an den Eingang a1, b1 der Speiseschaltung angeschlossen.

An der Sekundärwicklung 62 des Transformators 6 liegt die aus der Diode 73 und dem Kondensator 23 bestehende Serienschaltung. Die Diode 73 ist so gepolt, daß sie bei gesperrtem Schalter 5 leitend und bei leitendem Schalter 5 gesperrt ist. Parallel zum Kondensator 23 liegt der Ausgang a2, b2 der Speiseschaltung, an den der Verbraucher V angeschlossen ist. Anstelle dieses Verbrauchers V können gegebenenfalls mehrere Verbraucher mit Konstantspannung versorgt werden. Außerdem kann der Sperrumrichter weitere Sekundärkreise zur Speisung weiterer Verbraucher aufweisen, vorzugsweise solche, die wie der aus der Sekundärwicklung 62, der Diode 73 und dem Kondensator 23 bestehend Sekundärkreis aufgebaut sind.

Der Sperrumrichter ist mit einer Regelanordnung versehen, mit deren Hilfe die Leerlaufspannung bzw. die EMK auf einen konstanten Wert geregelt wird. Als Maß für die Leerlaufspannung dient die am Kondensator 22 auftretende Hilfsspannung U_{H}. Diese Hilfsspannung U_{H} ist als Versorgungsspannung an die Betriebsspannungseingänge des Regelvergleicher 31 und des Pulsbreitenmodulators 4 geführt und wird dem Regelvergleicher 31 über den aus den Widerständen 19 und 20 bestehenden Spannungsteiler als Istwert zugeführt. Der Regelvergleicher 31 steuert den Pulsbreitenmodulator 4. Mit Hilfe dieses Impulsbreitenmodulators 4 wird der Schalter 5, der insbesondere durch einen Halbleiterschalter bzw. Leistungs-Feldeffekttransistor gebildet sein kann, durch eine Folge von Steuerimpulsen abwechselnd in den leitenden und in den gesperrten Zustand gesteuert.

Der Kondensator 22 ist über die Diode 71 an die Wicklung 63 des Transformators 6 angeschlossen. Die Diode 71 ist so gepolt, daß sie bei leitendem Schalter 5 gesperrt und bei gesperrtem Schalter 5 leitend ist. Die Spannung U_{H} ist daher ein Maß für die Leerlaufspannung U0 bzw. EMK, die wiederum maßgeblich für die Ausgangsspannung U2 ist, aus der der Verbraucher V gespeist wird.

Der Regelvergleicher 31 ist ein Operationsverstärker, der mit seinem Bezugspotentialeingang unmittelbar am Einganganschluß b1 und mit seinem Pluseingang an der Referenzspannung U_{Ref} liegt. Ein Anschluß des Kondensators 22 ist ebenfalls mit dem Eingangsanschluß b1, d.h. mit Bezugspotential verbunden. Der andere Anschluß des Kondensators 22 ist über einen Spannungsteiler 19, 20 an den als Istwerteingang dienenden Minuseingang des Regelvergleichers 31 geführt.

Der Pulsbreitenmodulator 4 wird seinerseits durch den Regelvergleicher 31 so gesteuert, daß das Impuls-Pausen-Verhältnis der Steuerimpulsfolge in Abhängigkeit von der Regelabweichung verändert wird. Der Pulsbreitenmodulator 4 wird dabei durch den Regelvergleicher 31 derart gesteuert, daß im Regelbereich der Speiseschaltung die relative Einschaltdauer des Schalters 5 bei größeren Hilfsspannungen U_{H} und somit auch bei größeren Ausgangsspannungen U2 zunehmend größer wird. Insbesondere wird bei fester Pulsfolgefrequenz die Dauer der Steuerimpulse variiert.

Übersteigt die Eingangsspannung U1, die am Kondensator 21 entsteht, einen vorgegebenen Wert, so wird die Eingangsspannung U1 begrenzt. In diesem Fall wird der Pulsbreitenmodulator 4 in Abhängigkeit von der Eingangsspannung U1 gesteuert, und zwar derart, daß die relative Einschaltdauer des steuerbaren Schalters 5 bei größeren Eingangsspannungen U1 zunehmend größer wird. In diesem Fall ist die an der Wicklung 64 induzierte Spannung U1' größer als die Leerlaufspannung U0 und anstelle der Leerlaufspannung U0 übernimmt eine der Eingangsspannung U1 der Speiseschaltung proportionale Spannung U1', die von der Wicklung 64 des Transformators 6 geliefert wird, die Rolle des Istwertes.

Die mit der Ausgangsspannung U2 gekoppelte Hilfsspannung U_{H} und die mit der Eingangsspannung U1 gekoppelte Spannung U1' werden dadurch alternativ wirksam, daß dem Kondensator 22 zwei Stromzweige parallel geschaltet sind.

In einem erstem Stromzweig ist in Serie zur Wicklung 63 die Diode 71, in einem zweiten Stromzweig in Serie zur Wicklung 64 die Diode 72 angeordnet. Diese beiden Stromzweige sind einander parallel geschaltet. Bei dieser Parallelschaltung sind die Kathoden, d.h. gleichnamige Elektroden der Dioden 71 miteinander vernbunden. Außerdem ist das Ende der Wicklung 63 mit dem Anfang der Wicklung 64, d.h. ungleichnamige Anschlüsse der Wicklungen 63 und 64 zusammengeführt.

Ist der Schalter 5 geschlossen, so sind die Dioden 71 und 73 gesperrt und die Diode 72 ist leitend. Ist der Schalter 5 gesperrt, so befindet sich die Diode 72 in gesperrtem Zustand und die Dioden 71 und 73 leiten. Ist der Schalter 5 geschlossen, so wird die Eingangsspannung U1 auf die Wicklung 64 transformiert. Ist der Schalter 5 dagegen gesperrt, so erscheint die transformierte Ausgangsspannung an der Wicklung 63 und 62.

Die Dioden 71 und 72 liegen mit ihren Kathoden am Minuseingang des Regelvergleichers 31 und bewirken daher, daß von der übersetzten Ausgangsspannung U2 und von der übersetzten Eingangsspannung U1' jeweils die größere als Istwert wirksam ist.

Der pulsbreitengesteuerte Sperrwandler erzeugt aus dem konstanten Strom i0 die konstante Ausgangsspannung U2. Die Wicklung 63 versorgt über die Diode 71 die Steuerkreise des Sperrwandlers und bildet den Istwert für die Regelschaltung. Da das Windungsverhältnis der Wicklungen 61 und 62 konstant ist, wird somit im regulären Betrieb auch die Ausgangsspannung U2 praktisch konstant gehalten. Die Spannung an der Wicklung 64 ist über das Windungszahlverhältnis der Wicklungen 64 und 61 mit der Eingangsspannung U1 verkoppelt.

Bei einem zu niedrigen Lastwiderstand des Verbrauchers V wird die Spannung an der Wicklung 64 größer als die Spannung an der Wicklung 63. Die Pulsbreitensteuerung regelt in diesem Fall die Eingangsspannung U1. Dies entspricht bei einem vorgegebenen eingeprägten Strom i0 einer konstanten Leistungsaufnahme und, über den Wirkungsgrad, einer nahezu konstanten Ausgangsleistung. Die Speisung der Steuerkreise erfolgt somit auch dann mit konstanter, da geregelter Spannung, wenn die Ausgangsspannung U2 abgesunken ist.

Die Speiseschaltung nach Fig. 2 stimmt weitgehend mit der nach Fig. 1 überein. Abweichend ist die Bildung des dem Regelvergleicher 31 zugeführten Istwertes.

Der den Istwerteingang bildende Minuseingang des Regelvergleichers 31 ist über die Diode 76 an den Abgriff des aus den Widerständen 15 und 16 bestehenden und an den Eingang a1, b1 der Speiseschaltung liegenden Spannungsteilers angeschlossen. Der Minuseingang des Regelvergleichers 31 liegt außerdem über die Diode 77 am Abgriff eines weiteren Spannungsteilers. Dieser weitere Spannungsteiler besteht aus dem Widerstand 17 und der Kollektor-Emitterstrecke des Optokopplers 8. Der Widerstand 17 ist auf der dem Optokoppler abgewandten Seite an die Hilfsspannung + U_{H} angeschlossen. Der Emitter des Optokopplers 8 ist an das Bezugspotential bzw. den Anschluß b1 des Eingangs gelegt. Die lichtemittierende Diode des Optokopplers 8 ist über den Widerstand 18 an den Ausgang a2, b2 der Speiseschaltung angeschlossen. Sie ist dabei für die Ausgangsspannung U2 in Durchlaßrichtung gepolt.

Die Dioden 76 und 77 liegen mit ihren Kathoden am Minuseingang des Regelvergleichers 31 und bewirken daher, daß von der übertragenen und geteilten Ausgangsspannung U2 und von der geteilten Eingangsspannung U1 jeweils die größere als Istwert wirksam ist.

Die Hilfsspannung U_{H} kann insbesondere mit Hilfe eines in der Figur nicht dargestellten weiteren Ausgangskreises erzeugt werden. Dies gilt auch für die Betriebsspannung, die im gezeigten Beispiel gleich der Hilfsspannung + U_{H} ist.

Andererseits können in vorteilhafter Weise die Speiseschaltungen aus Fig. 1 und Fig. 2 kombiniert werden, z. B. in der Art, daß die Eingangsspannung vom Spannungsteiler 15, 16 nach Fig. 2 und die Ausgangsspannung von der zur Hilfsspannungserzeugung dienenden EMK-Wicklung 63 nach Fig. 1 aus geregelt wird.

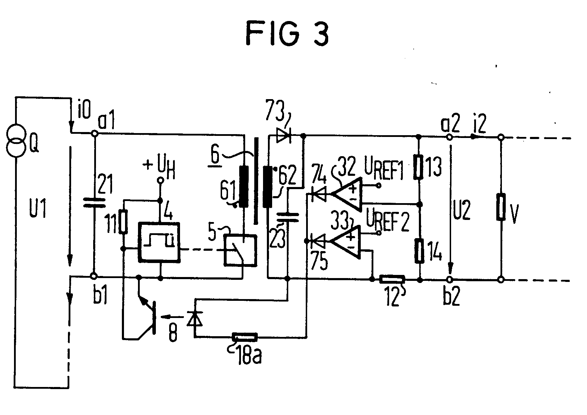

Die in Fig. 3 gezeigte Speiseschaltung stimmt ebenfalls weitgehend mit der nach Fig. 1 überein. Abweichend wird der Impulsbreitenmodulator 4 nicht jeweils über eine von zwei weiteren Wicklungen des Transformators 6, sondern im Betriebszustand der Spannungsregelung durch die Ausgangsspannung U2 der Speiseschaltung selbst und im Betriebszustand der Leistungsbegrenzung in Abhängigkeit vom Ausgangsstrom i2 der Speiseschaltung gesteuert. Die Steuerung des Pulsbreitenmodulators 4 durch den Ausgangsstrom i2 erfolgt in der Weise, daß die relative Einschaltdauer des Schalters 5 bei größeren Ausgangsströmen i2 zunehmend größer wird.

Parallel zum Ausgang a2, b2 der Speiseschaltung liegt der aus den Widerständen 13 und 14 bestehende Spannungsteiler. Der Widerstand 13 ist über die Diode 73 mit dem Anfang, der Widerstand 14 über den Widerstand 12 mit dem Ende der Sekundärwicklung 62 verbunden.

Dem Steuereingang des Pulsbreitenmodulators 4 sind die beiden, jeweils durch einen Operationsverstärker gebildeten Regelvergleicher 32 und 33 vorgeschaltet. Die Ausgänge der Regelvergleicher 32 und 33 sind über die beiden Dioden 74 und 75 zusammengeführt. Der Verbindungspunkt der Dioden 74 und 75 ist über den Widerstand 18 a und die lichtemittierende Diode des Optokopplers 8 an ein Bezugspotential, und zwar an den der Diode 9 abgewandten Anschluß des Kondensators 23 geführt. Die Emitter-Kollektorstrecke des Optokopplers 8 ist auf seiten des Emitters mit dem Anschluß b1, auf seiten des Kollektors unmittelbar mit dem Steuereingang der Pulsdauermodulators 4 und über den Widerstand 11 mit der Hilfsspannung + U_{H} verbunden. Die Hilfsspannung U_{H} kann insbesondere mit Hilfe eines weiteren Ausgangskreises erzeugt werden.

Der Regelvergleicher 32 liegt mit seinem Istwerteingang bzw. Minuseingang am Abgriff des aus dem Widerständen 13 und 14 bestehenden Spannungsteilers. An seinem Pluseingang liegt die Referenzspannung U_{Ref1}. Der Istwerteingang bzw. Pluseingang des Regelvergleichers 33 ist mit dem auf seiten der Sekundärwicklung 62 liegenden Anschluß des Widerstandes 12 verbunden. Am Minuseingang des Regelvergleichers 33 liegt die Referenzspannung U_{Ref2}. Der Widerstand 12 ist vom Ausgangsstrom i2 durchflossen und bildet einen Stromsensor für den Ausgangsstrom i2.

Die Dioden 74 und 75 liegen mit ihren Kathoden an der Anode der lichtemittierenden Diode des Optokopplers 8 und bewirken, daß von der geteilten Ausgangsspannung U2 und von der am Widerstand 12 abfallenden Spannung jeweils diejenige wirksam ist, die ohne Regelung den zugehörigen Referenzwert als erstes überschreiten würde. Dabei wirkt die geteilte Ausgangsspannung als Istwert für die Spannungsregelung und die am Widerstand 12 abfallende Spannung als Istwert für die Strombegrenzung.

Die Speiseschaltung eignet sich in besonderer Weise zur Verwendung in Einrichtungen zur Fernspeisung von Zwischenstellen in Einrichtungen der elektrischen oder elektrooptischen Nachrichtentechnik.

Auf diese Wiese können vorteilhaft in einer Fernspeiseeinrichtung für LWL-Regeneratoren je Zwischenstelle mehrere Verbraucher über eine gemeinsame Fernspeiseleitung versorgt werden.

## Patentansprüche

1. Speiseschaltung zur Speisung wenigstens eines Verbrauchers (V) mit einer aus einem eingeprägten Gleichstrom (i0) gewonnenen Gleichspannung (U2), mit einem parallel zum Eingang (a1, b1) der Speiseschaltung liegenden Kondensator (21) und mit einem steuerbaren Schalter (5), der in einem parallel zum Eingang (a1, b1) der Speiseschaltung angeordneten Stromzweig liegt und der mittels eines Pulsbreitenmodulators (4) in Abhängigkeit von einer für die Ausgangsspannung (U2) maßgeblichen Spannung (U2, U0) derart steuerbar ist, daß im Regelbereich der Speiseschaltung die relative Einschaltdauer des Schalters (5) bei größeren Ausgangsspannungen (U2) zunehmend größer wird,
**dadurch gekennzeichnet,** daß der Schalter (5) in Serie zu einer Primärwicklung (61) eines Speichertransformators (6) liegt, und daß die Speiseschaltung wenigstens einen Ausgangskreis mit einer Sekundärwicklung des Speichertransformators und einer derart gepolten Diode (73) enthält, daß die Diode (73) bei geschlossenem steuerbarem Schalter (5) gesperrt und bei geöffnetem steuerbaren Schalter (5) leitend ist.

2. Speiseschaltung nach Anspruch 1,
**dadurch gekennzeichnet**,
daß der Pulsbreitenmodulator (4) bei am Kondensator (21) anliegenden Eingangsspannungen U1, die einen vorgegebenen Betrag übersteigen, in Abhängigkeit von der Eingangsspannung (U1) derart steuerbar ist, daß die relative Einschaltdauer des Schalters (5) bei größeren Eingangsspannungen (U1) zunehmend größer wird.

3. Speiseschaltung nach Anspruch 1 oder 2,
**dadurch gekennzeichnet**,
daß die Quelle für die für die Ausgangsspannung maßgebliche Spannung durch eine weitere Wicklung (63) des Speichertransformators (6) gebildet ist.

4. Speiseschaltung nach einem der Ansprüche 1 bis 3,
**dadurch gekennzeichnet**,
daß als Quelle für eine der Eingangsspannung proportionale Spannung eine weitere Wicklung (64) vorgesehen ist.

5. Speiseschaltung nach Anspruch 3 und 4,
**dadurch gekennzeichnet**,
daß zwei jeweils aus einer der beiden weiteren Wicklungen (63,64) des Speichertransformators (6) und einer dazu in Serie angeordneten Diode (71,72) bestehende Stromzweige derart einander parallel geschaltet sind, daß gleichnamige Elektroden der beiden Dioden (71,72) zusammengeführt sind, und daß die Parallelschaltung der beiden Stromzweige und ein dazu parallel liegender Kondensator (22) zwischen dem Bezugspotentialeingang und dem Istwerteingang eines Regelvergleichers angeordnet ist.

6. Speiseschaltung nach Anspruch 2,
**dadurch gekennzeichnet**,
daß der Istwerteingang eines dem Pulsbreitenmodulator (4) vorgeschalteten Regelvergleichers (31) über je eine Diode (76,77) and den Abgriff eines parallel zum Eingang (a1,b1) liegenden Spannungsteilers und an den Abriff eines an einer Hilfsspannung liegenden weiteren Spannungsteilers liegt, und daß der weitere Spannungsteiler in einem Zweig die Emitterkollektor-Strecke eines durch die Ausgangsspannung (U2) steuerbaren Optokopplers (8) enthält.

7. Speiseschaltung nach Anspruch 1,
**dadurch gekennzeichnet**,
daß der Pulsbreitenmodulator (4) zusätzlich in Abhängigkeit vom Ausgangsstrom (i2) der Speiseschaltung derart steuerbar ist, daß die relative Einschaltdauer des Schalters (5) bei größeren Ausgangsströmen (i2) zunehmend größer wird.

8. Speiseschaltung nach Anspruch 7,
**dadurch gekennzeichnet**,
daß dem Steuereingang eines dem Pulsbreitenmodulator (4) vorgeschalteten Optokopplers (8) zwei über Dioden (74,75) zusammengeführte Regelvergleicher (32,33) vorgeschaltet sind, von denen der eine an den Abgriff eines am Ausgang (a2,b2) der Schaltungsanordnung liegenden Spannungsteilers (13,14) liegt und der andere an einem vom Ausgangsstrom (i2) durchflossenen Stromsensor liegt.

9. Speiseschaltung nach einem der Ansprüche 1 - 8,
**gekennzeichnet durch**
die Verwendung in einer Einrichtung zur Fernspeisung von Zwischenstellen in Einrichtungen der elektrischen oder elektrooptischen Nachrichtenübertragungstechnik.

## Claims

1. Supply circuit for supplying at least one load (V) with a DC voltage (U2) which is obtained from an impressed DC current (i0), having a capacitor (21) which is located in parallel with the input (a1, b1) of the supply circuit, and having a controllable switch (5), which is located in a current branch arranged in parallel with the input (a1, b1) of the supply circuit and can be controlled by means of a pulse-width modulator (4) as a function of a voltage (U2, U0), which determines the output voltage (U2), in such a manner that, in the control range of the supply circuit, the relative switched-on duration of the switch (5) becomes increasingly larger in the case of larger output voltages (U2), characterised in that the switch (5) is located in series with a primary winding (61) of a storage transformer (6), and in that the supply circuit contains at least one output circuit having a secondary winding of the storage transformer, and having a diode (73) which is polarised in such a manner that the diode (73) is blocked when the controllable switch (5) is closed and is conductive when the controllable switch (5) is open.

2. Supply circuit according to Claim 1, characterised in that, in the case of input voltages U1 which are applied to the capacitor (21) and exceed a predetermined magnitude, the pulse-width modulator (4) is controllable as a function of the input voltage (U1) in such a manner that the relative switched-on duration of the switch (5) becomes increasingly larger in the case of larger input voltages (U1).

3. Supply circuit according to Claim 1 or 2, characterised in that the source for the voltage which determines the output voltage is formed by a further winding (63) of the storage transformer (6).

4. Supply circuit according to one of Claims 1 to 3, characterised in that a further winding (64) is provided as the source for a voltage which is proportional to the input voltage.

5. Supply circuit according to Claims 3 and 4, characterised in that two current branches, which in each case comprise one of the two further windings (63, 64) of the storage transformer (6) and a diode (71, 72) which is arranged in series therewith, are connected in parallel with one another in such a manner that similar electrodes of the two diodes (71, 72) are joined together, and in that the parallel circuit of the two current branches and a capacitor (22) which is located in parallel therewith are arranged between the reference potential input and the actual value input of a control comparator.

6. Supply circuit according to Claim 2, characterised in that the actual value input of a control comparator (31) which is connected on the input side of the pulse-width modulator (4) is connected via in each case one diode (76, 77) to the pick-off of a voltage divider which is located in parallel with the input (a1, b1), and is connected to the pick-off of a further voltage divider which is connected to an auxiliary voltage, and in that the further voltage divider contains, in one branch, the emitter-collector junction of an optocoupler (8) which can be controlled by the output voltage (U2).

7. Supply circuit according to Claim 1, characterised in that the pulse-width modulator (4) can additionally be controlled as a function of the output voltage (i2) of the supply circuit, in such a manner that the relative switched-on duration of the switch (5) becomes increasingly larger in the case of larger output currents (i2).

8. Supply circuit according to Claim 7, characterised in that two control comparators (32, 33), which are joined together via diodes (74, 75), are connected on the input side of the control input of an optocoupler (8) which is connected on the input side of the pulse-width modulator (4), of which control comparators (32, 33) the one is connected to the pick-off of a voltage divider (13, 14) which is connected to the output (a2, b2) of the circuit arrangement, and the other is connected to a current sensor through which the output current (i2) flows.

9. Circuit arrangement according to one of Claims 1 - 8, characterised by use in a device for remotely supplying intermediate points in electrical or electro-optical telecommunications technology devices.

## Revendications

1. Circuit d'alimentation pour l'alimentation d'au moins un consommateur (V) en une tension continue (U2) obtenue à partir d'un courant continu (i0) indépendant de la charge, comportant un condensateur (21) monté en parallèle à l'entrée (a1, b1) du circuit d'alimentation et un interrupteur (5) qui est susceptible d'être commandé, qui est placé dans une branche du circuit de courant, montée en parallèle à l'entrée (a1, b1) du circuit d'alimentation et qui, au moyen d'un modulateur d'impulsions en durée (4) et en fonction d'une tension (U2, U0) qui dépend de la tension de sortie (U2), est susceptible d'être commandé de telle façon que, dans la plage de réglage du circuit d'alimentation, la durée relative de fermeture de l'interrupteur (5) croît pour des tensions de sortie (U2) croissantes,
caractérisé en ce que l'interrupteur (5) est monté en série avec un enroulement primaire (61) d'un transformateur à accumulation d'énergie (6), et en ce que le circuit d'alimentation comprend au moins un circuit de sortie comportant un enroulement secondaire du transformateur à accumulation d'énergie et une diode (73) polarisée de telle sorte qu'elle est bloquée lorsque l'interrupteur (5) est fermé et conductrice lorsque l'interrupteur (5) est ouvert.

2. Circuit d'alimentation selon la revendication 1,
caractérisé en ce que,
pour des tensions d'entrée U1 appliquées au niveau du condensateur (21) et qui excèdent une valeur prédéterminée, le modulateur d'impulsions en durée (4) est, en fonction de la tension d'entrée (U1), susceptible d'être commandé de telle sorte que la durée relative de fermeture de l'interrupteur (5) croît pour des tensions d'entrée (U1) croissantes.

3. Circuit d'alimentation selon la revendication 1 ou 2,
caractérisé en ce que,
la source pour la tension qui est fonction de la tension de sortie est constituée par un enroulement supplémentaire (63) du transformateur à accumulation d'énergie (6).

4. Circuit d'alimentation selon l'une des revendications 1 à 3,
caractérisé en ce que,
il est prévu, comme source pour une tension qui est proportionnelle à la tension d'entrée, un enroulement supplémentaire (64).

5. Circuit d'alimentation selon la revendication 3 ou 4,
caractérisé en ce que,
deux branches du circuit de passage du courant, dont chacune est constituée d'un des deux enroulements supplémentaires (63, 64) du transformateur à accumulation d'énergie (6) et d'une diode (71, 72) qui y est montée en série, sont montées entre elles en parallèle de telle sorte que les électrodes des deux diodes (71, 72) de même polarité soient réunies, et en ce que le circuit parallèle des deux branches et un condensateur (22) qui y est monté en parallèle, sont placés entre l'entrée du potentiel de référence et l'entrée de la valeur instantanée d'un comparateur de réglage.

6. Circuit d'alimentation selon la revendication 2,
caractérisé en ce que,
l'entrée de valeur instantanée d'un comparateur de réglage (31) relié en amont au modulateur d'impulsions en durée (4), est relié, par l'intermédiaire de, respectivement, une diodes (77, 76), à la prise d'un premier diviseur de tension monté en parallèle à l'entrée (a1, b1) et à la prise d'un second diviseur de tension porté à une tension auxiliaire, et en ce que le second diviseur de tension comporte, dans une branche, la section émetteur-collecteur d'un opto-coupleur (8) susceptible d'être commandé par la tension de sortie (U2).

7. Circuit d'alimentation selon la revendication 1,
caractérisé en ce que,
le modulateur d'impulsions en durée (4) est, d'autre part, susceptible d'être commandé, en fonction du courant de sortie (i2) du circuit d'alimentation, de telle sorte que la durée relative de fermeture de l'interrupteur (5) croît pour des courants de sortie (i2) croissants.

8. Circuit d'alimentation selon la revendication 7,
caractérisé en ce que,
à l'entrée de commande d'un opto-coupleur (8) relié en amont au modulateur d'impulsions en durée (4), sont reliés en amont deux comparateurs de réglage (32, 33) qui sont réunis par des diodes (74, 75) et parmi lesquels l'un est relié à la prise d'un diviseur de tension (13, 14) monté à la sortie (a2, b2) du montage et l'autre est relié à un détecteur de courant traversé par le courant de sortie (i2).

9. Circuit d'alimentation selon l'une des revendications 1 à 8,
caractérisé par sa mise en oeuvre dans une installation de téléalimentation de postes intermédiaires dans des installations de la technique de la transmission d'informations par voies électriques ou électro-optiques.
